# EUROPÄISCHE PATENTANMELDUNG

(11) **EP 1 563 802 A2**
(43) Veröffentlichungstag der Anmeldung: **17.08.2005**
(21) Anmeldenummer: 04022407.3
(22) Anmeldetag: 21.09.2004
(51) Int. Cl.: A61C 8/00

(54) **Wurzelförmiges Kieferimplantat**

(30) Priorität: 16.02.2004 DE 202004002318 U
(71) Anmelder: Oraltronics Dental Implant Technology GmbH, 28199 Bremen (DE)
(72) Erfinder: Grafelmann, Hans, Prof. Dr., 28359 Bremen (DE)
(74) Vertreter: Leitner, Waldemar, Dr. techn.

(57) **Zusammenfassung**

Die Erfindung betrifft ein wurzelförmiges Kieferimplantat mit einem Gewinde (2) mit einer Gewindeflanke (8) zum Einschrauben in einen Kiefer und einem Halteabschnitt (4) zum Halten von Zahnersatz.

Erfindungsgemäß ist vorgesehen, dass die Flankentiefe des Gewindes (2) über die gesamte Länge von zervikal nach apikal gleichbleibend ist.

## Beschreibung

Die Erfindung betrifft ein wurzelförmiges Kieferimplantat mit einem Gewinde zum Einschrauben in einen Kiefer und einem Halteabschnitt zum Halten von Zahnersatz.

Solche Implantate sind bekannt, sie werden meist in den Kiefer an der Stelle eines extrahierten oder ausgefallenen Zahns durch Einschrauben eingesetzt, um dort den Zahnersatz zu halten. Hierbei kann ein Ersatz für einen einzelnen Zahn oder, bei Verwendung mehrerer Kieferimplantate, ein Ersatz mehrerer Zähne verwendet werden.

Zum Halten weist das Kieferimplantat einen Pfosten auf, der an dem Teil des Kieferimplantates, der mit dem Gewinde zum Einschrauben in den Kiefer versehenen ist, ein- oder mehrstückig angesetzt ist. Im Übergangsbereich des gewindebewährten Teils zum Pfosten ist vielfach ein Schaft ausgebildet, der im eingesetzten Zustand des Kieferimplantates im Bereich der Gingiva angeordnet ist.

Das Gewinde ist oftmals als selbstschneidendes Gewinde mit einem konischen Außengewindeverlauf ausgebildet und weist in Insertionsrichtung quasi eine abgerundete Spitze auf. Der Konusaußendurchmesser ist dabei größer als der Innendurchmesser einer für das Implantat zur Insertion in den Kiefer vorgenommenen Bohrung.

Nachteilig bei bekannten wurzelförmigen Kieferimplantaten ist, dass der Bereich der abgerundeten Spitze ein flaches, nicht schneidendes Gewinde aufweist. Bei der Insertion in harten Knochen führt dies oft dazu, dass die abgerundete Spitze bei Erreichen des Knochenkontakts einem weiteren Einschrauben entgegenwirkt, so dass Knochengewebe gequetscht werden kann. Weiterhin ist bei einem flach auslaufenden Gewinde im apikalen Teil die Verankerungswirkung im Kiefer gering.

Der Erfindung liegt somit die Aufgabe zugrunde, den Halt eines Kieferimplantats der eingangs genannten Art im Kiefer zu verbessern.

Zur Lösung der Aufgabe wird daher erfindungsgemäß ein Kieferimplantat nach der eingangs genannten Art vorgeschlagen, das dadurch gekennzeichnet ist, dass die Flankentiefe des Gewindes über die gesamte Länge von zervikal nach apikal gleichbleibend ist.

Hierdurch wird zunächst erreicht, dass auch der apikale Bereich zum Erreichen eines festen Haltes ausgebildet ist, damit eine gute Primärstabilität des Implantates ermöglicht und mehr Widerstand gegen Zugkräfte und laterale Krafteinwirkung erzielt wird.

Um eine gute Schnittleistung zu erzielen und somit die Implantatinsertion zu verbessern, sind gemäß einer vorteilhaften Weiterbildung der Erfindung - vorzugsweise schräge - vertikale Schnittkerben in jedem Gewindegang angebracht, die in einem Kurvenverlauf im Uhrzeiger- oder Gegenuhrzeigersinn von apikal her gesehen verlaufen, vorzugsweise je 360 Grad zwei oder drei Schnittkerben, vorzugsweise um 5 bis 90 Grad versetzt. Dadurch wird erreicht, dass das Gewinde auf seiner gesamten Länge eine selbstschneidende Eigenschaft aufweist. Durch die Anordnung der Schnittkerben wird im Gegensatz zu bekannten wurzelförmigen Implantaten erreicht, dass die Insertionstiefe nach erfolgter Vorbohrung variierbar ist, ohne die bereits geschnittenen Gewindestrukturen im Knochen zu verletzen.

Das erfindungsgemäße Kieferimplantat ermöglicht somit einen festen Sitz bei gleichzeitig günstigen Insertionsbedingungen und gutem Abschluss der Insertionsöffnung.

Dadurch, dass der Durchmesser eines Gewindekerns des Gewindes nach apikal abnimmt, insbesondere dass der Gewindekern nach apikal sich konisch verjüngt, wird die Insertion begünstigt. Die Verdrängung des Knochengewebes durch den Gewindekern beim Einschrauben erfolgt langsam und gleichmäßig und fällt dabei mit zunehmender Insertionstiefe geringer aus. Weil das zum Ein- oder Ausschrauben benötigte Drehmoment nach apikal abnimmt, kann auch der Durchmesser des Gewindekerns in diese Richtung ohne Stabilitätsverlust für das Implantat abnehmen.

Die Gewindeschaftkontur in axialer Richtung, also der einhüllende Verlauf gemäß eines axialen, halbierenden Schnitts des erfindungsgemäßen Kieferimplantats ist gemäß einer weiteren vorteilhaften Weiterbildung der Erfindung in einem apikalen Bereich konisch und in einem coronalen Bereich zylindrisch ausgebildet.

Hierdurch wird eine stressfreie Anlagerung des Implantatkörpers an den crestalen Kieferknochen erreicht.

Gemäß einer weiteren vorteilhaften Weiterbildung der Erfindung beträgt die Länge der zylindrischen Außenkontur zwischen 10 und 90 % der Gesamtlänge des Implantates. Hierdurch ist in vorteilhafter Art und Weise beim erfindungsgemäßen Kieferimplantat das Längenverhältnis zwischen zylindrischem und konischem Anteil an die Knochenqualität anpaßbar.

Dadurch, dass die gemäß einer weiteren vorteilhaften Weiterbildung der Erfindung nach apikal gerichteten Flankenoberflächen gegenüber den nach zervikal gerichteten Flankenoberflächen zur Gewindeachse unterschiedliche Verlaufsformen aufweisen, können unterschiedliche Anforderungen berücksichtigt werden. Die nach apikal gerichteten Flankenoberflächen müssen im wesentlichen geeignet sein, eine Kaubelastung auf den Kiefer zu übertragen. Den nach zervikal gerichteten Flankenoberflächen kommt größere Bedeutung beim Einschrauben in den Kiefer zu. Dabei kann die zur zervikalen Seite liegende Flankenoberfläche eine Auskehlung aufweisen. Die Neigung der Gewindeflanken kann in einer weiteren vorteilhaften Weiterbildung der Erfindung zum apikalen Verlauf abgesenkt sein, wobei die obere Flankenoberfläche flach und an der Schnittkante zur apikalen Richtung abgesenkt ist. In einer weiteren vorteilhaften Weiterbildung der Erfindung sind die zum apikalen Teil laufenden Spitzen des Gewindes abgeflacht und in Drehrichtung angeschärft.

Bei einer weiteren vorteilhaften Weiterbildung der Erfindung ist das Kieferimplantat durch einen Halteabschnitt zum Aufnehmen eines Pfostens zum Halten von Zahnersatz gekennzeichnet. Durch diese zumindest zweistückige Ausgestaltung kann das Kieferimplantat, insbesondere dessen Gewinde, unabhängig vom Pfosten an die Beschaffenheit des Kiefers und dem Gingivaverlauf im Bereich der Insertionsstelle angepasst werden. Die Wahl des Pfostens orientiert sich an dem daran zu befestigenden Zahnersatz, was von der Gewindeform des Kieferimplantates unabhängig erfolgen kann. Somit wird eine große Variationsmöglichkeit für das Kieferimplantat mit Pfosten geschaffen, wobei fertigungstechnisch nur wenige Gewinde- und Pfostenvariationen zu schaffen sind. Die Implantate werden üblicherweise in drei Standardgrößen mit den Durchmessern 4,0 4,5 und 5,25 mm verwendet. Zur Anpassung des Schaftes an einen bestimmten Pfostendurchmesser, ist der Schaftabschnitt des Implantates ganz oder teilweise zum Endbereich hin sich konisch verjüngend oder erweiternd ausgebildet.

Vorteilhaft ist gemäß einer weiteren vorteilhaften Weiterbildung der Erfindung im Bereich des Halteabschnitts ein Innengewinde, insbesondere ein Sackgewinde ausgebildet. Hierdurch kann der Pfosten effizient und sicher am Halteabschnitt des Kieferimplantates befestigt werden.

Gemäß einer weiteren vorteilhaften Weiterbildung der Erfindung ist das Kieferimplantat dadurch gekennzeichnet, dass im Bereich des Halteabschnitts eine Öffnung zum Ansetzen eines Drehwerkzeuges zum Einschrauben des Implantatkörpers in den Kiefer ausgebildet ist. Die Handhabung des Kieferimplantates, von dem nach der Insertion lediglich ein kleiner Haltequerschnitt aus dem Kiefer herausragt, wird hierdurch wesentlich vereinfacht. Bevorzugt ist diese Öffnung zum Ansetzen eines Innensechskantschlüssels ausgebildet. Eine solche Öffnung, die insbesondere zum Ansetzen eines Innensechskantschlüssels ausgebildet ist, oder auch als Achtkant oder eine andere unrunde Form eignet sich ebenfalls dazu, einen Pfosten einzusetzen und diesen gegen Verdrehen zu sichern. Die axiale Fixierung eines eingesetzten Pfostens kann durch eine weitere Zentralschraube vorgenommen werden.

Gemäß einer weiteren vorteilhaften Weiterbildung der Erfindung wird ein Kieferimplantat der eingangs genannten Art vorgeschlagen, das zumindest partiell eine Oberflächenbehandlung aufweist. Eine solche partielle oder auch selektiv anrauhende Oberflächenbehandlung ist insbesondere im Bereich des Gewindes ausgebildet, um hier ein Verwachsen von Kieferknochengewebe mit dem Kieferimplantat, insbesondere mit der Oberfläche des Gewindes und des Gewindeschaftes, zu begünstigen. Um das Einschrauben des Kieferimplantates durch die Oberflächenbehandlung im Schnittkerbenbereich nicht unnötig zu erschweren, kann die Oberflächenbehandlung nur partiell ausgebildet sein. Günstig ist, dass der Implantatkörper die Oberflächenbehandlung auf den Bereichen des Implantatkörpers aufweist, die nicht schneidend wirken. Hierdurch wird ein Verwachsen des Körpergewebes mit dem Kieferimplantat unterstützt und dennoch ein günstiges Einschraubverhalten, insbesondere ein Selbstschneideverhalten des Gewindes ermöglicht. Dabei weist der Implantatkörper die Oberflächenbehandlung bevorzugt auf der Oberfläche des Gewindekerns und dem Gewindegang auf.

In einer vorteilhaften Ausgestaltung ist die Oberflächenbehandlung als Aufrauhung zur Oberflächenvergrößerung ausgeführt. Eine Oberflächenvergrößerung führt zu einer größeren Angriffsfläche für die Zellen des Kieferknochens zum Verwachsen. Ebenfalls findet das Körpergewebe in der rauhen Oberfläche mehr Halt als in einer glatten. Die Rauhtiefe liegt typischerweise bei etwa 5 µm. Die behandelte Oberfläche ist bevorzugt mit VTPS (Vakuum-Titanplasmaspray) und einem FBR-Material (Fast Bone Regeneration) beschichtet und/oder partikelgestrahlt und/ oder säuregeätzt. Die Oberflächenbehandlungen, insbesondere die FBR-Beschichtung führt/führen neben einem insgesamt festen Verwachsen auch zu einer beschleunigten Knochenregeneration und dabei zu einer kurzen Einheilphase bis zur vollständigen Belastbarkeit mit Osseointegration des eingesetzten Kieferimplantates.

Bevorzugt weist der Halteabschnitt zervikal eine nicht angerauhte biologische Zone auf, um eine gute Einheilung mit geringen Infektionsrisiken zu erreichen.

Eine günstige Verbindung von Halteabschnitt und Pfosten kann durch eine, zumindest in einem zur Seitenfläche des Halteabschnitts weisenden Bereich, konische Ausbildung einer Kontaktfläche des Halteabschnitts erzielt werden, um die Abdichtung und Stabilisierung der Verbindung zwischem Implantat und Pfosten zu verbessern. Eine solche konische Ausbildung der Kontaktfläche kann derart gestaltet sein, dass im Bereich zwischen Kontakt- und Seitenfläche eine Anfasung in einem Winkel von bis zu etwa 70° - bezogen auf eine Gewinde- oder Längsachse - vorgenommen wird. Dabei kann ein Teil der Kontaktfläche unangefast bleiben. Der Pfosten ist in diesem Fall entsprechend der Form der Kontaktfläche ausgebildet. Bei einer weiteren Ausführung ist die konische Ausbildung der Kontaktfläche mit einer Mehrzahl von Segmenten oder Facetten gestaltet, wobei der Pfosten entsprechend der Form der Kontaktfläche ausgebildet ist. Dadurch wird eine zusätzliche Rotationssicherung der Implantat-Aufbau-Verbindung erzielt und die Präzision erhöht.

Weitere vorteilhafte Weiterbildungen der Erfindung sind Gegenstand der Unteransprüche.

Die Erfindung wird nachfolgend anhand der folgenden Zeichnungen näher erläutert.
- Fig. 1:: zeigt ein erstes Ausführungsbeispiel eines wurzelförmiges Kieferimplantat in einer axialen Schnittansicht, bei dem die Flankentiefe des Gewindes über die gesamte Länge von zervikal nach apikal gleichbleibend ist;
- Fig. 2a:: zeigt eine Ausführungsform des wurzelförmigen Kieferimplantats der Figur 1 in der Aufsicht auf eine Kontaktfläche zu einem Pfosten, bei dem auf jedem Gewindegang zwei im Kurvenverlauf versetzte schräge Schnittkerben angebracht sind;
- Fig. 2b:: zeigt eine weitere Ausführungsform des wurzelförmigen Kieferimplantats der Figur 1 in der Aufsicht auf die Kontaktfläche zum Pfosten, bei dem auf jedem Gewindegang drei im Kurvenverlauf nicht versetzte gerade Schnittkerben angebracht sind;
- Fig. 3a:: zeigt schematisch verschiedene Verlaufsformen von auf dem Gewindegang angebrachten Schnittkerben;
- Fig. 3b:: zeigt schematisch verschiedene Gewindeflankenquerschnitte;
- Fig. 4:: zeigt ein zweites Ausführungsbeispiel eines wurzelförmigen Kieferimplantats in einer axialen Schnittansicht;
- Fig. 5a-5c:: zeigt schematisch verschiedene Ausbildungen eines Schaftabschnittes des Implantats in einer axialen Schnittansicht;
- Fig. 6:: zeigt schematisch eine Ausbildung des Schaftabschnittes in axialer Schnittansicht, bei dem eine konische Ausbildung einer Kontaktfläche zum Pfosten ausgebildet ist.

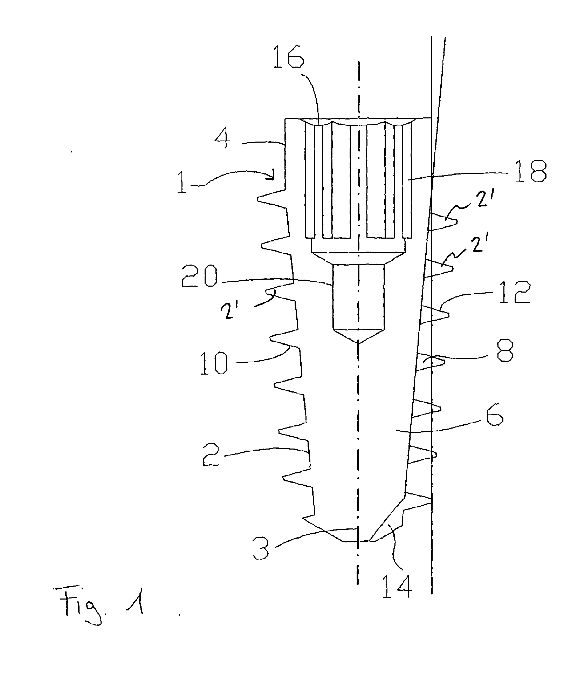

Die Figur 1 zeigt ein wurzelförmiges Kieferimplantat 1 mit einem mehrere Gewindegänge 2' aufweisenden Gewinde 2, einer strichpunktiert eingezeichneten Achse 3 und einem Halteabschnitt 4. Der Halteabschnitt 4 dient zum Halten eines nicht dargestellten Pfostens. Das Gewinde 2 weist einen Gewindekern 6 und eine etwa helixförmig umlaufende Gewindeflanke 8 auf. Die Gewindeflanke 8 umfaßt eine nach apikal und eine nach zervikal gerichtete Gewindeoberfläche 10 bzw. 12. Der Gewindekern 6 weist in Insertionsrichtung eine Gewindespitze 14 auf.

Wie aus der Figur 1 ersichtlich ist, ist das Gewinde 2 derart ausgebildet, dass die Flankentiefe der Gewindeflanken 8 über die gesamte Länge von zervikal nach apikal gleichbleibend ist. Durch diese Maßnahme wird in vorteilhafter Art und Weise erreicht, dass auch der apikale Bereich des Gewindes 2 zum Erreichen eines festen Halters ausgebildet ist. Damit wird eine gute Primärstabilität des Implantats ermöglicht und mehr Widerstand gegen Zugkräft und laterale Krafteinwirkungen erzielt.

Der Gewindekern 6 weist vom Halteabschnitt 4 bis zur Gewindespitze 14 eine konisch zulaufende Form auf, so dass der zur Gewindespitze 14 hin gerichtete Teil des Gewindekerns 6 einen deutlich geringen Durchmesser aufweist als der zum Halteabschnitt 4 hin gerichtete Gewindeabschnitt. Eine derartige Maßnahme - eine Abnahme des Durchmessers des Gewindekerns von zervikal nach apikal - besitzt den Vorteil, dass hierdurch insbesondere das Einschrauben des Kieferimplantats 1 in den Kiefer erleichtert wird, da hierdurch die Verdrängung des Knochengewebes durch den Gewindekern 6 beim Einschrauben langsam und gleichmßig erfolgt und dabei mit zunehmender Insertionstiefe geringer ausfällt. Weil der zum Ein- oder Ausschrauben benötigte Drehmoment nach apikal abnimmt, kann auch der Durchmesser des Gewindekerns 6 in dieser Richtung ohne Stabilitätsverlust für das Implantat abnehmen.

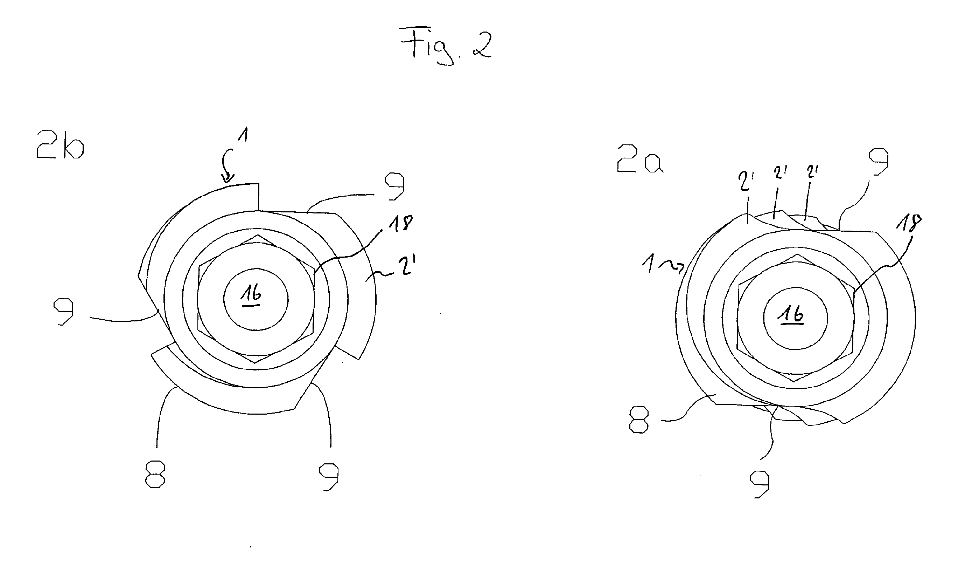

Um nun die Schnittleistung des Gewindes 2 und somit die Insertion zu verbessern, ist vorzugsweise vorgesehen, dass in die Gewindeflanke 8 des Gewindes 2 als Schnittinzissionen wirkende Schnittkerben 9 eingebracht sind. Wir verweisen hierzu auf die Figuren 2a und 2b, in denen eine Draufsicht auf das Kieferimplantat in die apikale Richtung dargestellt ist. Die Figur 2a zeigt Gewindeflanke 8 des Gewindes 2, bei dem - exemplarisch - auf jedem Gewindegang 2' des Gewindes 2 zwei Schnittkerben 9 angeordnet sind, die jeweils um einen Winkel von ca. 30 Grad zueinander versetzt angeordnet sind.

Dem Fachmann ist klar ersichtlich, dass die obige Ausgestaltung des Kieferimplantats 1 mit jeweils um ca. 30 Grad zueinander versetzten Schnittkerben 9 nicht zwingend ist. Vielmehr ist es auch möglich, anstelle von zwei Schnittkerben 9 drei oder mehr Schnittkerben pro Gewindegang 2' vorzusehen. Auch ist es möglich, anstelle der vorstehend beschriebenen Versetzung von ca. 30 Grad eine andere Versetzung im Bereich von 5-90 Grad, abhängig vom gewünschten Einsatzzweck, vorzusehen. Die Versetzung kann dabei sowohl im Uhrzeiger- als auch im Gegenuhrzeigersinn erfolgen.

In Figur 2b ist nun eine weitere Ausführungsform des Kieferimplantats 1 dargestellt, bei der - wiederum exemplarisch - pro Gewindegang 2' drei Schnittkerben 9 vorgesehen sind, wobei aber hier die einzelnen Schnittkerben 9 eines Gewindegangs 2' gegenüber den Schnittkerben 9 des darauffolgenden Gewindegangs 2' des Gewindes 2 nicht versetzt sind.

Durch die Anordnung von Schnittkerben 9 in den Gewindegängen 2' des Gewindes 2 wird in vorteilhafter Art und Weise gegenüber den bekannten wurzelförmigen Implantaten erreicht, dass die Insertionstiefe nach erfolgter Vorbohrung variierbar ist, ohne die bereits geschnitte Gewindestruktur im Knochen zu verletzen. Hierbei wird bevorzugt, dass die Schnittkerben 9 schräg angebracht sind, um ein besonders günstiges Einschraubverhalten, insbesondere ein besonders günstiges Selbstschneideverhalten, zu gewährleisten.

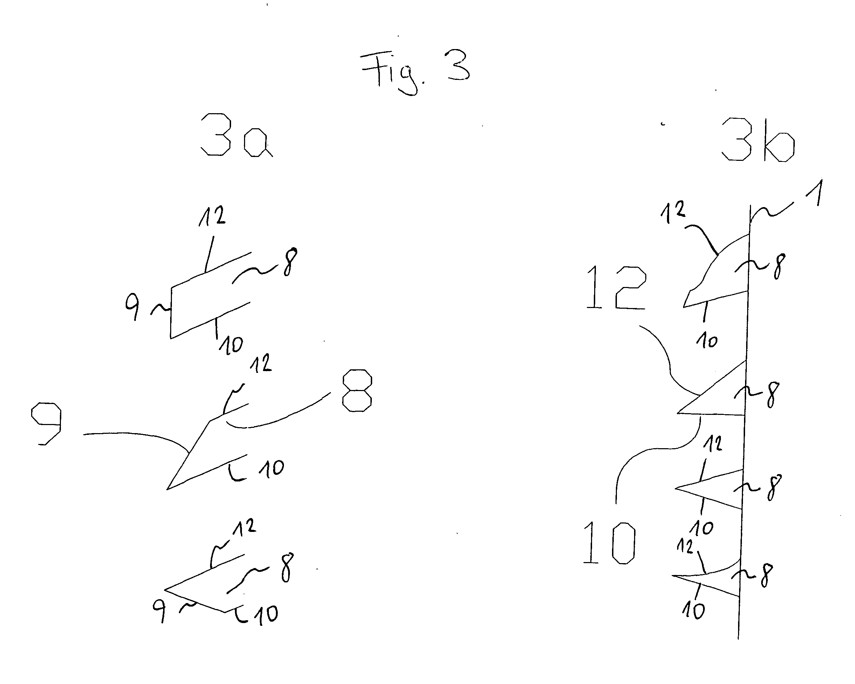

In den Figuren 3a und 3b sind nun unterschiedliche Ausgestaltungen der apikal gerichteten Flankenoberflächen und/oder der zervikal gerichteten Flankenoberflächen 10 und 12 des Gewindes 2 dargestellt. Die in der oberen Abbildung der Figur 3a dargestellte Ausgestaltung einer Flanke des Gewindes 2 weist im wesentlichen ebene zervikale und apikale Flankenoberflächen und eine gerade Schnittkerbe 9 auf. Eine derartige Ausgestaltung besitzt den Vorteil einer guten Schnittleistung.

Die in der mittleren Abbildung der Figur 3a dargestellte Flankenoberfläche des Gewindes 2 weist eine nach oben abgeschrägte Schnittkerbe 9 auf. Eine derartige Ausgestaltung der Schnittkerbe 9 besitzt den Vorteil, dass sie beim Einschrauben des Kieferimplantats eine Verdichtung des Knochens oberhalb der entsprechenden Gewindeoberfläche 12 bewirkt. Dies resultiert in einem erhöhten Widerstand gegen ein Herausziehen des Kieferimplantats 1.

Die in Figur 3a untere Abbildung zeigt eine Gewindeflanke 8 des Gewindes 2 mit einer nach unten abgeschrägten Schnittkerbe 9. Eine derartige Ausgestaltung besitzt den Vorteil, dass sie zu einer Verdichtung unterhalb der Gewindeoberfläche 10 führt, woraus ein erhöhter Widerstand gegen Kaukräfte resultiert.

In der Figur 3b sind nun vier unterschiedliche Verläufe von Gewindeflanken 8 dargestellt, welche sich jeweils durch den Verlauf der nach apikal gerichteten Gewindeoberfläche 10 und/oder der nach zervikal gerichteten Gewindeoberfläche 12 unterscheiden. Die in Figur 3b oberste Abbildung zeigt eine Gewindeflanke 8 mit einer Auskehlung der zur zervikalen Seite hinliegenden Gewindeoberfläche 12. Eine derartige Ausgestaltung dieser zervikalen Gewindeoberfläche 12 besitzt aufgrund der dadurch erreichten Schaufelform den Vorteil eines erhöhten Widerstands gegenüber einem Herausziehen des eingesetzten Kieferimplantats. Die apikale Gewindeoberfläche 10 verläuft hierbei geneigt zur Achse des Kieferimplantats, was zur Verdichtung des Knochens unterhalb dieser apikalen Gewindeoberfläche 10 führt.

Der in der darauffolgenden, zweiten Abbildung der Figur 3b dargestellte Verlauf der Gewindeflanke 8 zeigt eine im wesentlichen ebene zervikale Gewindeoberfläche 12 und eine ebenfalls im wesentlichen ebene apikale Gewindeoberfläche 10, wobei die apikale Gewindeoberfläche 10 im wesentlichen rechtwinkelig zur Achse des Kieferimplantats 1 verläuft. Eine derartige Ausgestaltung besitzt den Vorteil, dass hierdurch ein erhöhter Widerstand gegenüber Kaukräften gegeben ist.

Die dritte Abbildung der Figur 3b zeigt ebene apikale und zervikale Gewindeflächen 10 und 12, die jeweils zur Achse des Kieferimplantats 1 geneigt verlaufen. Eine derarige Ausgestaltung stellt einen guten Kompromiß im Hinblick auf eine hohe Widerstandskraft sowohl gegen Kaukräfte als auch gegen Zugkräfte dar.

Die vierte Abbildung der Figur 3b zeigt eine Gewindeflanke 8, deren zervikale Gewindefläche 12 gekrümmt ausgeführt ist. Eine derartige Ausgestaltung besitzt den Vorteil eines erhöhten Widerstands gegenüber Zugkräften.

Wie nun wiederum aus der Figur 1 zu ersehen ist, ist an der der Gewindespitze 14 abgewandten Seite des Halteabschnitts 4 ist eine etwa zylindrisch ausgebildete Öffnung 16 ausgebildet, die in den Halteabschnitt 4 des Gewindes 2 hineinreicht. Die Öffnung 16 weist einen Ansetzbereich 18 mit einer zur Achse 3 konzentrischen, nicht zylindrischen, beispielsweise polygonalen oder hexagonalen Innenoberfläche zum Ansetzen eines Drehwerkzeuges auf. Der Ansetzbereich 18 ist ebenfalls zum rotationsgesicherten Einsetzen eines Pfostens zum Halten von Zahnersatz geeignet. An den Ansetzbereich 18 schließt sich ein Innengewinde 20 an. Es ist dafür vorgesehen, mittels einer zusätzlichen Schraube einen in die Öffnung 16 und in den Ansetzbereich 18 eingesetzten Pfosten in axialer Richtung zu fixieren. Ebenfalls kann eine Einheilkappe zum Abdecken der Öffnung 16 temporär mit Hilfe des Innengewindes 20 fixiert werden.

Bei dem Kieferimplantat 1 wird über die beschriebene Ausgestaltung der Kontur des Gewindes 2 und der günstigen Verteilung der Schnittkerben ein fester Halt des eingesetzten Kieferimplantates bei gleichzeitig günstigem Einschraubverhalten und weiterhin gutem, insbesondere schnellem Einheilverhalten ermöglicht.

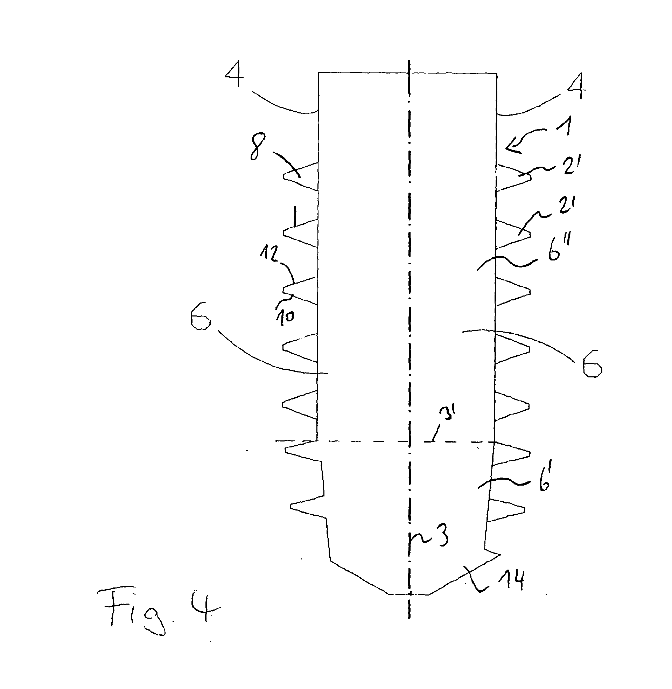

In Figur 4 ist nun ein zweites Ausführungsbeispiel eines Kieferimplantats 1 dargestellt, dessen Aufbau im wesentlichen mit demjenigen des ersten Ausführungsbeispiels übereinstimmt, so dass einander entsprechende Teile mit den gleichen Bezugszeichen versehen können und nicht mehr näher beschrieben werden müssen.

Der wesentliche Unterschied zwischen den Kieferimplantaten 1 des ersten und des zweiten Ausführungsbeispiels besteht nun darin, dass der Durchmesser des Gewindekerns 6 in seinem apikalen Bereich 6' konisch und in seinem coronalen Bereich 6" zylindrisch ausgebildet ist. Der einfacheren Darstellung halber ist in Figur 4 eine strichlierte Linie 3' eingezeichnet, welche schematisch eine fiktive Trennlinie zwischen den beiden vorgenannten Bereichen 6' und 6" repräsentiert. Eine derartige Maßnahme besitzt den Vorteil, dass eine streßfreie Anlagerung des Implantatkörpers an den crestalen Kieferknochen erreicht wird. Je nach Anwendungszweck kann dabei die Länge des zylindrischen, coronalen Bereichs 6" des Gewindekerns 6 zwischen 10 % und 90 % der Gesamtlänge des Implantats beträgt.

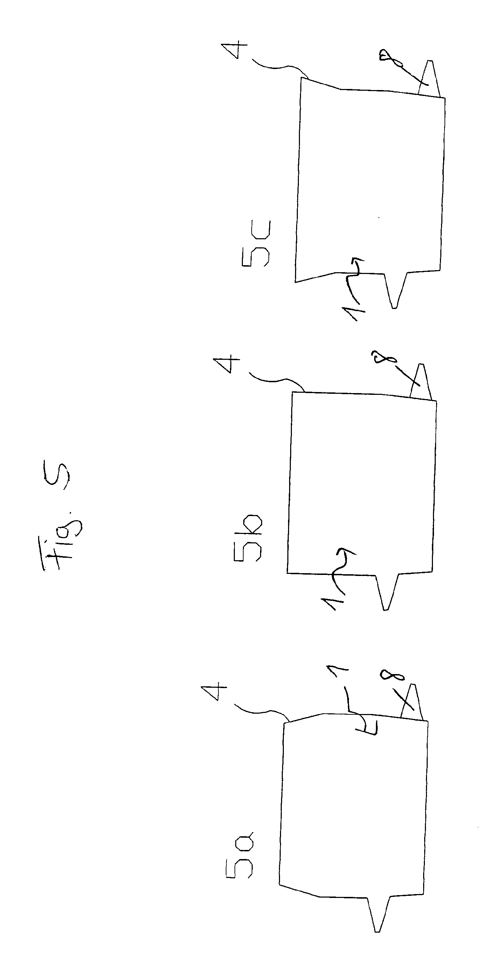

In den Figuren 5a bis 5c sind nun drei Kieferimplantate 1 dargestellt, welche sich grundsätzlich im Durchmesser des Halteabschnitts 4 unterscheiden. Kieferimplantate werden üblicherweise standardmäßig in drei Größen, nämlich in einer ersten Größe mit einem großen Durchmesser, in einer zweiten Größe mit einem mittleren und in einer dritten Größe mit einem kleinen Durchmesser, beispielsweise 5,25 mm, 4,50 mm und 4,00 mm, ausgebildet. Die Figur 5a zeigt exemplarisch ein Kieferimplantat 1 mit einem großen Durchmesser, die Figur 5b ein Kieferimplantat 1 mit einem mittleren Durchmesser und die Figur 5c ein Kieferimplantat 1 mit einem kleinen Durchmesser. Um nun unabhängig von dem auf das Kieferimplantat 1 aufzusetzenden Pfosten des Kieferimplantat 1 an die Beschaffenheit des Kiefers und dem Ginggiva-Verlauf im Bereich der Insertionsstelle auswählen zu können, ist es erforderlich, dass das zervikale Ende des Halteabschnitts 4 an den Durchmesser des Pfostens angebracht werden muß. Dies wird - wie aus den Figuren 5a-5c ersichtlich - dadurch erreicht, dass der Endbereich 4' des Halteabschnitts 4 zum Pfosten hin sich konisch verjüngend (Figur 5a) bzw. konisch erweiternd (Figur 5c) ausgebildet ist.

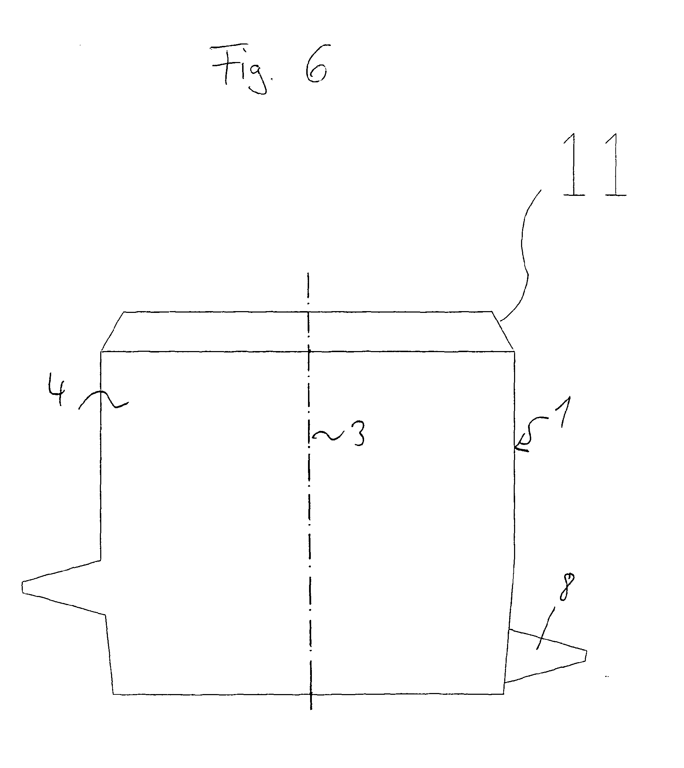

In Figur 6 ist nun eine weitere Ausführungsform eines Kieferimplantats 1 dargestellt, bei dem der Halteabschnitt 4 eine Kontaktfläche 11 aufweist, welche zumindest in einem zur Seitenfläche des Halteabschnitts 4 weisenden Bereich eine konische Ausbildung aufweist. Hierdurch wird die Abdichtung/die Sicherung der Verbindung zwischen dem Kieferimplantat 1 und dem Pfosten verbessert. Eine solche konische Ausbildung der Kontaktfläche 11 kann derart gestaltet sein, dass sie im Bereich zwischen Kontaktfläche 11 und der Seitenfläche des Halteabschnitts 4 eine Anfasung in einem Winkle von bis zu 70 Grad - bezogen auf die Längsachse 3 - vorgenommen wird. Dabei kann ein Teil der Kontaktfläche 11 unangefaßt bleiben. Der Pfosten ist in diesem Fall entsprechend der Form der Kontaktfläche ausgebildet.

Bei einer weiteren Ausführung des Kieferimplantats ist die konische Ausbildung der Kontaktfläche 11 mit einer Mehrzahl von Segmenten oder Facetten gestaltet, wobei der Pfosten entsprechend der Form der Kontaktfläche ausgebildet ist. Hierdurch wird eine zusätzliche Rotationssicherung der Implantat-Aufbau(Pfosten)-Verbindung erzielt und die Präzision erhöht.

Es wird bevorzugt, dass das Kieferimplantat 1 zumindest partiell eine Oberflächenbehandlung aufweist. Eine solche partielle oder auch selektiv anrauhende Oberflächenbehandlung wird insbesondere im Bereich des Gewindes 2 ausgebildet, um hier ein Verwachsen von Kieferknochengewebe mit einem Kieferimplantat 1, insbesondere mit der Oberfläche des Gewindes 2 und des Schaftes des Gewindes 2, zu begünstigen. Hierbei wird bevorzugt, dass die Oberflächenbehandlung auf die Bereiche des Implantatkörpers aufgebracht wird, die nicht schneidend wirken. Hierdurch wird in vorteilhafter Art und Weise ein Verwachsen des Körpergewebes mit dem Kieferimplantat unterstützt und dennoch ein günstiges Einschraubverhalten, insbesondere ein Selbstschneideverhalten des Gewindes ermöglicht. Vorzugsweise weist der Implantatkörper die Oberflächenbehandlung auf der Oberfläche des Gewindekerns 6 und auf dem Gewindegang 2' auf.

In einer vorteilhaften Ausgestaltung ist die Oberflächenbehandlung als Aufrauhung zur Oberflächenvergrößerung ausgeführt. Eine Oberflächenvergrößerung führt zu einer größeren Angriffsfläche für die Zellen des Kieferknochens zum Verwachsen. Ebenfalls findet das Körpergewebe in der rauhen Oberfläche mehr Halt als in einer glatten. Die Rauhtiefe liegt typischerweise bei etwa 5 µm. Die behandelte Oberfläche ist bevorzugt mit VTPS (Vakuum-Titanplasmaspray) und einem FBR-Material (Fast Bone Regeneration) beschichtet und/oder partikelgestrahlt und/ oder säuregeätzt. Die Oberflächenbehandlungen, insbesondere die FBR-Beschichtung führt/führen neben einem insgesamt festen Verwachsen auch zu einer beschleunigten Knochenregeneration und dabei zu einer kurzen Einheilphase bis zur vollständigen Belastbarkeit mit Osseointegration des eingesetzten Kieferimplantates.

## Patentansprüche

1. Wurzelförmiges Kieferimplantat mit einem Gewinde (2) mit einer Gewindeflanke (8) zum Einschrauben in einen Kiefer und einem Halteabschnitt (4) zum Halten von Zahnersatz, **dadurch gekennzeichnet, dass** die Flankentiefe des Gewindes (2) über die gesamte Länge von zervikal nach apikal gleichbleibend ist.

2. Kieferimplantat nach Anspruch 1, **dadurch gekennzeichnet, dass** in die Gewindeflanke (8) des Gewindes (2) mindestens eine Schnittkerbe (9) eingebracht ist.

3. Kieferimplantat nach Anspruch 2, **dadurch gekennzeichnet, dass** in die Gewindeflanke (8) pro Gewindegang (2') zwei oder drei Schnittkerben (9) eingebracht sind.

4. Kieferimplantat nach Anspruch 2, **dadurch gekennzeichnet, dass** entsprechende Schnittkerben (9) benachbarter Gewindegänge (2') gegeneinander versetzt angeordnet sind.

5. Kieferimplantat nach Anspruch 4, **dadurch gekennzeichnet, dass** die Versetzung zwischen 5 und 90 Grad beträgt.

6. Kieferimplantat nach einem der vorangehenden Ansprüche, **dadurch gekennzeichnet, dass** ein Gewindekern (6) des Gewindes (2) eine vom Halteabschnitt (4) zu einer Gewindespitze (14) des Gewindes (2) hin sich verjüngende, insbesondere konisch zulaufende, Form aufweist.

7. Kieferimplantat nach einem der Ansprüche 1 bis 5, **dadurch gekennzeichnet, dass** der Gewindekern (6) des Gewindes (2) in seinem apikalen Bereich (6') konisch und in seinem coronalen Bereich (6") zylindrisch ausgebildet ist.

8. Kieferimplantat nach Anspruch 7, **dadurch gekennzeichnet, dass** die Länge des zylindrischen, coronalen Bereichs (6") zwischen 10 % und 90 % der Gesamtlänge des Kieferimplantats (1) beträgt.

9. Kieferimplantat nach einem der vorstehenden Ansprüche, **dadurch gekennzeichnet, dass** nach apikal gerichteten Flankenoberflächen (10) des Gewindes (2) gegenüber nach zervikal gerichteten Flankenoberflächen (12) unterschiedliche Verlaufsformen aufweisen.

10. Kieferimplantat nach einem der vorstehenden Ansprüche, **dadurch gekennzeichnet, dass** in den Halteabschnitt (4) ein Pfosten zum Halten von Zahnersatz einsetzbar ist.

11. Kieferimplantat nach Anspruch 1, **dadurch gekennzeichnet, dass** im Halteabschnitt (4) ein Innengewinde (20), insbesondere ein Sackgewinde, ausgebildet ist.

12. Kieferimplantat nach Anspruch 11, **dadurch gekennzeichnet, dass** im Bereich des Halteabschnitts (4) eine Öffnung (16) zum Ansetzen eines Drehwerkzeugs zum Einschrauben des Kieferimplantats in den Kiefer ausgebildet ist.

13. Kieferimplantat nach Anspruch 12, **dadurch gekennzeichnet, dass** die Öffnung (16) zum Ansetzen eines Innensechskantschlüssels ausgebildet ist.

14. Kieferimplantat nach einem der Ansprüche 7 bis 10, **dadurch gekennzeichnet, dass** der zervikale Bereich des Halteabschnitts (4) zum Ausgleichen unterschiedlicher Durchmesser dieses Bereichs und des Halteabschnitts (4) und des Pfostens sich verjüngend oder sich erweiternd ist.

15. Kieferimplantat nach einem der vorstehenden Ansprüche, **dadurch gekennzeichnet, dass** der Halteabschnitt (4) eine Kontaktfläche (11) aufweist.

16. Kieferimplantat nach Anspruch 15, **dadurch gekennzeichnet, dass** die Kontaktfläche (11) eine Anfasung, Facetten und/oder Segmente aufweist.

17. Kieferimplantat nach einem der vorstehenden Ansprüche, **dadurch gekennzeichnet, dass** das Kieferimplantat (1) zumindest partiell eine Oberflächenbehandlung aufweist.

18. Kieferimplantat nach Anspruch 17, **dadurch gekennzeichnet, dass** die Oberflächenbehandlung eine oberflächenvergrößernde Aufrauhung ist.

19. Kieferimplantat nach Anspruch 17, **dadurch gekennzeichnet, dass** der Halteabschnitt (4) eine nicht-angerauhte Zone aufweist.
